# EUROPÄISCHE PATENTSCHRIFT

(11) **EP 0 627 513 B1**
(45) Veröffentlichungstag und Bekanntmachung des Hinweises auf die Patenterteilung: **29.12.1997**
(21) Anmeldenummer: 94107170.6
(22) Anmeldetag: 07.05.1994
(51) Int. Cl.: D03D 25/00, D03D 15/00, E04D 5/02, E04D 5/12

(54) **Gewebe zur Verstärkung bzw. Armierung von Flächengebilden**
Flat structures' reinforcing or armouring fabric
Tissu pour le renforcement ou l'armature de structures planes

(30) Priorität: 19.05.1993 DE 9307658 U; 08.10.1993 DE 4334306
(43) Veröffentlichungstag der Anmeldung: 07.12.1994
(73) Patentinhaber: SYNTEEN GEWEBE TECHNIK GMBH, D-79771 Klettgau-Erzingen (DE)
(72) Erfinder: Lagemann, Bernd, D-79761 Waldshut/Tienen 1 (DE); Mathias, Friedrich, D-79771 Klettgau/Erzingen (DE)
(74) Vertreter: Weiss, Peter, Dr. rer.nat.

(56) Entgegenhaltungen:
- EP-A- 0 402 099
- FR-A- 2 339 488
- FR-A- 2 571 766
- FR-A- 2 625 243
- GB-A- 784 511
- US-A- 5 212 010

## Beschreibung

Die Erfindung betrifft ein Gewebe zur Verstärkung bzw. Armierung von Flächengebilden, insbesondere von Kunststoffdach- und Dichtungsbahnen, aus Schuß- und Kettfäden, die miteinander offene Räume ausbilden.

Armierungsgewebe werden für eine Vielzahl von Zwecken benutzt. Beispielsweise ist aus der FR-A 2 339 488 ein Armierungsgewebe zur Herstellung eines Schaumstoffes bebaut. Zum Zwecke einer geigneten Herstellung und zur Verbesserung der Festigkeit dieses Schaumstoffes weist dieses Armierungsgewebe in einem zentralen Bereich mehr Kettfäden auf als in den Randbereichen.

Ferner werden Amierungsgewebe beispielsweise im Straßenbau benutzt, wobei Spezialgewebe in die Bitumenschicht eingebettet werden. Gewebe dienen auch zur Hangbefestigung an Straßen oder als Putzarmierung. Dabei sollen im vorliegenden Fall unter Gewebe alle Flächengebilde verstanden werden, die durch Weben, Stricken, Wirken, Rascheln od.dgl. hergestellt werden, oder als Gelege, Vlies usw. vorliegen.

In vielen Fällen kommt es darauf an, daß das Verstärkungs- bzw. Armierungsgewebe eine hohe Reißfestigkeit bzw. ein bestimmtes Kraft/Dehnungsverhalten aufweist. Vor allem gilt dies für den Kantenbereich. Als Beispiel wird im vorliegenden Fall auf Kunststoffdach- und Dichtungsbahnen verwiesen. Diese Bahnen sind geschlossene Kunststofflächengebilde, in die ein Gewebe zur Verstärkung und Armierung eingebettet ist. In der Regel besteht dieses Gewebe aus beabstandeten Schuß- und Kettfäden, die sich kreuzen und zwischen sich offene Räume bilden, die von dem Werkstoff des Flächengebildes ausgefüllt und bedeckt werden. Diese Bahnen sind erheblichen mechanischen Beanspruchungen aus gesetzt, so daß auch an die Gewebeeinlage erhebliche Anforderungen gestellt werden. Belastungen treten dabei sowohl in Längs- als auch in Querrichtung auf, die zu einem An-, Weiter- und Durchreißen der Gewebeeinlage bzw. der gesamten Bahn führen können.

Beispielsweise die erwähnten Kunststoffdach- und Dichtungsbahnen, auf die allerdings die vorliegende Erfindung keinesfalls beschränkt sein soll, werden auf einen entsprechenden Untergrund in Bahnen verschiedener Breite verlegt und vollflächig aufgeklebt. Diese Art der Aufbringung von Bahnen verliert aber immer mehr an Bedeutung, da sich erhebliche Auflast- und Beschwerungsprobleme beim Aufkleben zur Vermeidung von Hohlräumen ergeben. Ferner ist bei einem gleichmäßigen Kleberauftrag eine große Menge an Kleber erforderlich, der zudem in Fugen und Vertiefungen verschwindet. Bei der Notwendigkeit einer Dampfsperre ist zudem eine zusätzliche Zwischenschicht erforderlich, so daß die Ausführung eines derartigen Dachaufbaus aufwendig und kompliziert ist.

Heute werden deshalb zur Befestigung der Bahnen vermehrt mechanische Befestigungssysteme verwendet. Hierbei werden die Bahnen randseits durch Schrauben mit Unterlegscheiben festgelegt und dann entweder überlappend verschweißt oder aber, sofern sie auf Stoß verlegt sind, durch einen zusätzlichen Streifen überdeckt und ebenfalls verschweißt.

Die Befestigung mittels mechanischer Befestigungssysteme hat jedoch den Nachteil, daß die Bahnen durch Windkräfte, und hier vor allem durch Saugkräfte des Windes beim Drüberstreichen, in Schwingung versetzt werden und dadurch entspechende Zugkräfte auf die Befestigungspunkte und den besonders beanspruchten Kantenbereich einwirken. Bei einer entsprechenden Gebäudehöhe, Fläche, einwirkenden Kraft usw. ist es möglich, daß die Bahnen an ihren Befestigungspunkten einreißen und sich lösen.

Kunststoffdach- und Dichtungsbahnen werden vorzugsweise im Flachdachbau bei gewerblichen Gebäuden oder aber auch im Privatbaubereich eingesetzt. Insbesondere bei öffentlichen Objekten unterliegen diese Bahnen einer Vielzahl von Zulassungs- und Eignungsvorschriften. Es gelten nationale und internationale Vorschriften von Baubehörden, Bauämtern, Zulassung- und Prüfungsstellen, wie z.B. Din, BS,ISO, ASTM sowie Vorschriften von Versicherungsgesellschaften (in orkan- und sturmgefährdete Gebiete) wie in Zukunft die verschärfte FMI in Amerika. Diese Vorschriften machen es erforderlich, daß die Bahnen durch geeignetere Verstärkungen bzw. Armierungen verfestigt werden, damit sie den entsprechenden Zulassungskriterien entsprechen, ohne daß dabei eine Erhöhung der Produktionskosten stattfindet, oder sich am bestehenden System etwas ändert.

Aus der FR-A-2 571 766 sind Dichtungsbahnen bekannt, bei denen in einer Bitumenschicht ein Armierungsgewebe gemäß dem Oberbegriff des Anspruchs 1 eingebettet ist. Dieses Armierungsgewebe kann beispielsweise aus Glasfasern bestehen. Zum Zwecke der Beseitigung von Dillatationen ist in Längsrichtung in den Randbereich zumindest ein Faden aus Kohlenstoffasern vorgesehen. Bevorzugt sind die Fäden aus Kohlenstoffasern in das Gittergewebe der Glasfasern miteingelegt. Dabei können sie Fäden des Gittergewebes ersetzen.

Aufgabe der vorliegenden Erfindung ist es, ein Spezialgewebe der o.g. Art zu entwickeln, welches ein universelles, ohne großen Aufwand zu handhabendes Produkt darstellt, um Bahnen zu verstärken bzw. armieren und insbesondere ihre Weiterreißfestigkeit im Kantenbereich maßgeblich zu erhöhen.

Zur Lösung dieser Aufgabe führt, daß an ein Grundgewebe ein Kantenbereich anschließt, in dem die Schußfäden und/oder die Kettfäden verstärkt und die offenen Räume im Kantenbereich größer sind als im Grundgewebe.

Dies bedeutet, daß das Grundgewebe insgesamt gleich belassen wird, wobei es, wie üblich, aus organischen Faserstoffen, wie Polyester, Polyamid, Polyacryl usw. oder auch aus anorganischen Faserstoffen wie Glas bestehen kann. Diese textilen Flächen liegen als Vliesstoffe, Gewebe, Gewirke, Geflecht, Gelege oder ähnliches vor.

Für die Verstärkung des Kantenbereiches kommen mehrere Möglichkeiten in Betracht. Zum einen ist es möglich, im Kantenbereich mit stärkeren Kettfäden zu arbeiten. Ferner können auch im Kantenbereich Kettfäden aus einem anderen Material benutzt werden, welches eine höhere Festigkeit besitzt. Besteht beispielsweise das Grundgewebe aus Polyesterfäden, so könnten die Kettfäden im Randbereich aus Aramid sein, welches eine wesentlich höhere Festigkeit besitzt. Das Gleiche gilt auch für Fasern aus Kohlenstoff, Glas oder für Stahlfäden. Kombinationen der einzelnen Faserstoffe untereinander sind ebenfalls möglich.

Die Verstärkung gilt im übrigen nicht nur für die Kettfäden sondern ist im gleichen Sinne auch für die Schußfäden anwendbar. Vor allem gilt dies, wenn die Schußfäden den Kantenbereich bilden.

Im bevorzugten Ausführungsbeispiel wird die Verstärkung des Kantenbereichs jedoch durch besondere Webtechniken erzielt. Zum einen können die Kett- bzw. Schußfäden im Kantenbereich nicht nur aus einem einzigen Faden, sondern aus einem Fadenbündel bestehen. Zum anderen werden bevorzugt auch zumindest zwei benachbarte Fäden zu einem Fadenbündel zusammengefaßt, so daß im Kantenbereich größere offene Räume zwischen den Fäden entstehen. Diese offenen Räume zusammen mit der Verstärkung der Fäden durch Bündelung verhindern ein Beschädigen und auch ein Ausreißen bei hohen Belastungen. Es genügt, wenn, wie bisher, die gleiche Anzahl von Befestigungselementen verwendet wird.

Die Verstärkung des Randbereichs kann somit je nach Anforderung durch eine andere Webtechnik, einen anderen Materialeinsatz oder eine andere Mischung sowie eine bestimmte Breite den entsprechenden Bahnen angepaßt werden. Durch eine exakt bemessene Bündelung einzelner Fäden zu Fadenbündeln insbesonder im rechten und linken Kantenbereich in Längs- und/oder in Querrichtung des Gewebes sowie durch die Wahl einer bestimmten Breite werden die gestellten Forderungen erfüllt. Beispielsweise muß nach dem FM I-90 Test eine Bahn der Größe 3,8m x 7,5m eine Minute lang einem Druck von 4,3 kPa standhalten, ohne daß dabei eine Schädigung auftritt. Der FM I-90 Test wird in naher Zukunft für Bahnen in den USA Pflicht werden. Bisherige Gewebe mußten dagegen nur den FM I-60 Test überstehen, der besagte, daß eine Bahn der Größe 3,8m x 7,5m ohne Schädigung eine Minute einem Druck von 2,9 kPa standhalten muß. Mit den erfindungsgemäßen Kantenbereichverstärkungen ist der FM I-90 Test ohne Schwierigkeiten zu überstehen.

Bevorzugt werden die erfindungsgemäßen Gewebe noch stabilisiert, so daß sie nicht verzogen bzw. verschoben werden können. Die Stabilisierung erfolgt beispielsweise mit Kunststoff, Stärke oder Kleber. Dabei sollte die Stabilisierung des Gewebes mit einem Material erfolgen, welches dem jeweiligen Stoff der Bahn angepaßt ist.

Durch das erfindungsgemäße Gewebe wird eine Verstärkung bzw. Armierung geschaffen, welche wesentlich erhöhten Windlasten besonders im Kantenbereich standhält. Das Gewebe selbst ist unverändert falt- und rollbar und wird durch Knickung in seiner Wirksamkeit nicht beeinträchtigt.

Ein erfindungsgemäßes Gewebe kann im übrigen auch dadurch hergestellt werden, daß zuerst eine Gewebebahn mit einer mehrfachen Breite des gewünschten Gewebes hergestellt wird. Ein erfindungsgemäß verstärkter Bereich befindet sich dann nicht nur im Kantenbereich dieser Gewebebahn, sondern auch im Bereich der Breite des gewünschten Gewebes. Nach Herstellung dieser Gewebebahn kann dann die Gewebebahn in der Breite des gewünschten Gewebes längs geschnitten werden, so daß ein sich in der Gewebebahn befindlicher verstärkter Bereich durchgeschnitten wird. Hierdurch werden wieder Gewebe gebildet, deren Kantenbereich bevorzugt beidseits verstärkt ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 einen Querschnitt durch ein Ausführungsbeispiel einer Dachbelegung nach dem Stand der Technik;
Fig. 2 einen Querschnitt durch ein weiteres Ausführungsbeispiel einer Dachbelegung nach dem Stand der Technik;
Fig. 3 eine Draufsicht auf einen Ausschnitt einer erfindungsgemäßen Armierung insbesondere für Kunststoffdach- und Dichtungsbahnen.

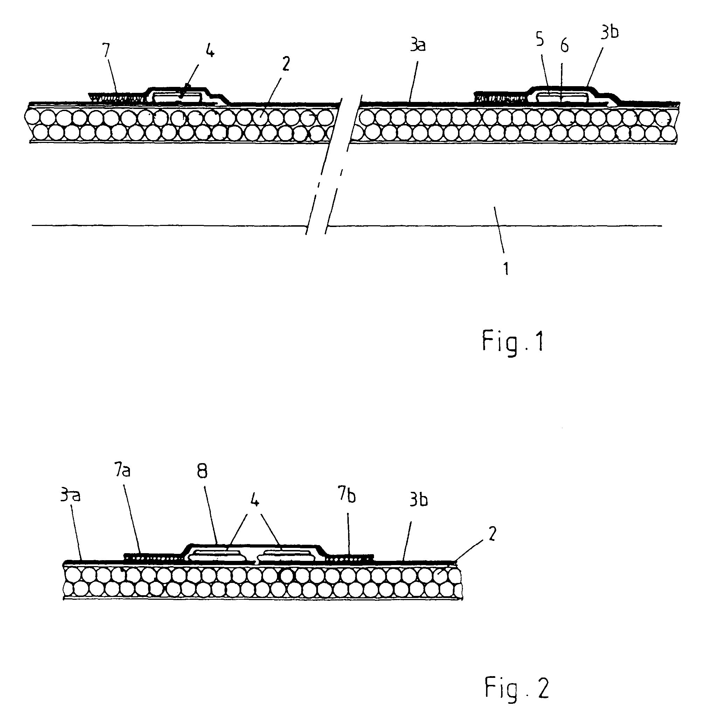

Bei einer herkömmlichen Dachbelegung gem. den Figuren 1 und 2 wird beispielsweise auf eine Betonplatte 1 eine Isolierung 2 aufgelegt. Diese Isolierung 2 wird sodann von Kunststoffdach- und Dichtungsbahnen 3 abgedeckt, die in Bahnen verschiedener Breite verlegt werden. Dabei können die einzelnen Bahnen 3a und 3b sich im Randbereich überlappen, wie dies in Fig. 1 dargestellt ist. Möglich ist auch die Verlegung auf Stoß gem. Fig. 2.

In der Regel findet auch die Festlegung der Bahnen 3 in ihrem Randbereich mittels mechanischer Befestigungssysteme 4 statt, wobei diese beispielsweise aus einer Schraube 5 mit Unterlegscheibe 6 bestehen. Im überlappenden Bereich werden die Befestigungssysteme 4 von einem Randbereich der benachbarten Bahn 3b überdeckt, wobei diese Bahn nach der Überdeckung des Befestigungssystems 4 in ihrem Randbereich thermisch verschweißt wird, wie dies durch die Bezugszahl 7 angedeutet ist. Anstelle einer Verschweißung kann auch ein Verkleben od.dgl. stattfinden.

Werden die Bahnen 3a und 3b gem. Fig. 2 auf Stoß verlegt und jeweils in ihrem Randbereich durch Befestigungssysteme 4 festgelegt, so werden diese Befestigungssysteme 4 durch einen zusätzlichen Abdeckstreifen 8 überdeckt, der wiederum beidseits der Befestigungssysteme 4 durch thermische Verschweißung 7a und 7b mit den Bahnen 3a und 3b verbunden wird.

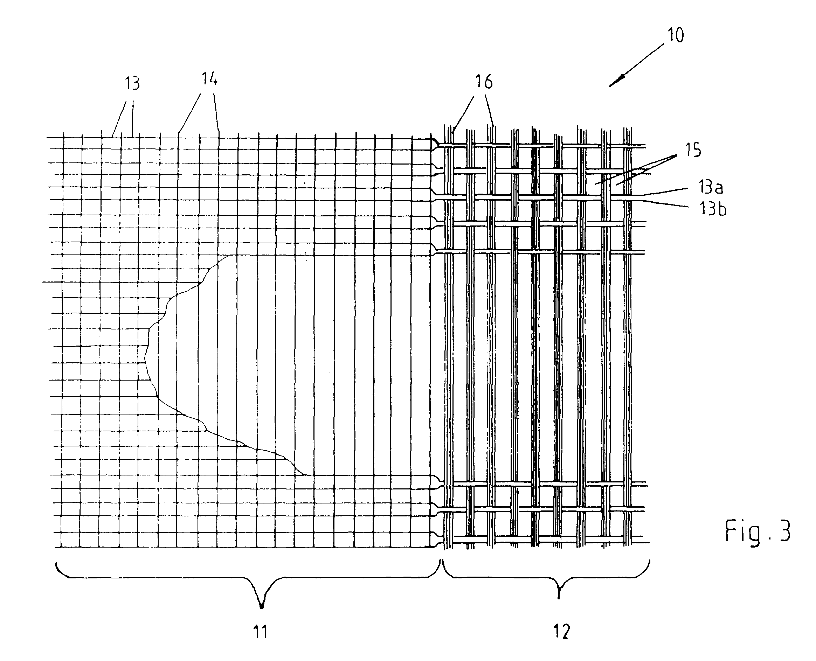

Da diese Kunststoffdach- und Dichtungsbahnen erheblichen Belastungen ausgesetzt sind, sind sie in der Regel durch ein Spezialgewebe armiert, wobei ein erfindungsgemäßes Spezialgewebe in Fig. 3 gezeigt ist. Diese Spezialgewebe 10 bestehen im wesentlichen aus einem Grundgewebebereich 11 und einem verstärkten Kantenbereich 12. In Querrichtung verlaufen Schußfäden 13, in Längsrichtung Kettfäden 14.

Während in dem gezeigten Ausführungsbeispiel das Grundgewebe 11 aus einzelnen, sich kreuzenden Schußfäden und Kettfäden 13 bzw. 14 besteht, ist erkennbar, daß der Kantenbereich 12 wesentlich verstärkt ist. Jeweils zwei benachbarte Schußfäden 13a und 13b werden gebündelt, wobei sich zwischen den einzelnen Fäden größere offene Räume 15 ergeben.

Ferner bestehen im Randbereich 12 die Ketten nicht mehr aus einzelnen Kettfäden 14 sondern aus Fadenbündeln 16. Hierdurch wird ein wesentlich verstärkter Kantenbereich 12 gebildet, der erheblich widerstandsfähiger gegen mechanische Belastungen ist.

## Patentansprüche

1. Gewebe zur Verstärkung bzw. Armierung von Flächengebilden (3), insbesondere von Kunststoffdach- und Dichtungsbahnen, aus Schuß- und Kettfäden (13, 14), die miteinander offene Räume (15) ausbilden,
dadurch gekennzeichnet,
daß an ein Grundgewebe (11) ein Kantenbereich (12) anschließt, in dem die Schußfäden (13) und/oder die Kettfäden (14) verstärkt und die offenen Räume (15) im Kantenbereich (12) größer sind als im Grundgewebe (11).

2. Gewebe nach Anspruch 1, dadurch gekennzeichnet, daß zwei oder mehr benachbarte Schußfäden (13a, 13b) im Kantenbereich (12) zusammengeführt sind.

3. Gewebe nach Anspruch 1 oder 2, dadurch gekennzeichnet, daß die Kettfäden im Kantenbereich (12) aus Fadenbündeln (16) bestehen.

4. Gewebe nach einem der Ansprüche 1 - 3, dadurch gekennzeichnet, daß die Kettfäden im Kantenbereich (12) einen stärkeren Durchmesser haben.

5. Gewebe nach wenigstens einem der Ansprüche 1 - 4, dadurch gekennzeichnet, daß Schuß- und Kettfäden (13, 14) im Grundgewebe (11) und/oder im Kantenbereich (12) stabilisiert sind.

6. Gewebe nach Anspruch 5, dadurch gekennzeichnet, daß die Stabilisierung mittels Kunststoffen, Stärke oder Kleber erfolgt.

7. Gewebe nach Anspruch 6, dadurch gekennzeichnet, daß die Stabilisierung des Gewebes (10) dem jeweiligen Stoff des Flächengebildes (3) angepaßt ist.

## Claims

1. Fabric for strengthening and/or reinforcing flat structures (3), more especially plastics material roofing and sealing webs, formed from weft and warp threads (13, 14), which form open spaces (15) with one another, characterised in that a basic fabric (11) is connected to an edge area (12), in which the weft threads (13) and/or the warp threads (14) are strengthened and the open spaces (15) in the edge area (12) are greater than in the basic fabric (11).

2. Fabric according to claim 1, characterised in that two or more adjacent weft threads (13a, 13b) are brought together in the edge area (12).

3. Fabric according to claim 1 or 2, characterised in that the warp threads in the edge area (12) comprise thread bundles (16).

4. Fabric according to one of claims 1 - 3, characterised in that the warp threads in the edge area (12) have a larger diameter.

5. Fabric according to at least one of claims 1 - 4, characterised in that weft and warp threads (13, 14) are stabilised in the basic fabric (13) and/or in the edge area (12).

6. Fabric according to claim 5, characterised in that the stabilisation is effected by means of plastics materials, starch or glue.

7. Fabric according to claim 6, characterised in that the stabilisation of the fabric (10) is adapted to the respective material of the flat structure (3).

## Revendications

1. Tissu pour renforcer ou armer des structures planes (3), notamment des bandes d'étanchéité ou de couvertures en matière plastique, formées de fils de trame et de chaîne (13, 14) formant entre eux des espaces ouverts (15),
caractérisé en ce qu'
une trame (11) se poursuit par un bord (12) dans lequel fils de trame (13) et/ou les fils de chaîne (14) sont renforcés et les espaces ouverts (15) du bord (12) sont plus grands que dans la trame (11).

2. Tissu selon la revendication 1,
caractérisé en ce que
deux ou plusieurs fils de trame (13a, 13b) sont réunis dans un bord (12).

3. Tissu selon l'une des revendications 1 ou 2,
caractérisé en ce que
les fils de chaîne sont formés de faisceaux de fils (16) dans le bord (12).

4. Tissu selon l'une des revendications 1 à 3,
caractérisé en ce que
les fils de chaîne ont un diamètre renforcé au niveau du bord (12).

5. Tissu selon au moins l'une des revendications 1 à 4,
caractérisé en ce que
les fils de trame et de chaîne (13, 14) sont stabilisés dans la trame (11) et/ou dans le bord (12).

6. Tissu selon la revendication 5,
caractérisé en ce que
la stabilisation est faite à l'aide de matière plastique, d'amidon ou de colle.

7. Tissu selon la revendication 6,
caractérisé en ce que
la stabilisation du tissu (10) est adaptée à la matière respective de la structure plane (3).
